# EUROPEAN PATENT SPECIFICATION

(11) **EP 0 398 274 B1**
(45) Date of publication and mention of the grant of the patent: **22.06.1994**
(21) Application number: 90109188.4
(22) Date of filing: 16.05.1990
(51) Int. Cl.: F16D 65/12, F16D 55/40, F16D 55/36, B60T 1/06

(54) **Aircraft brake**
Flugzeugbremse
Frein d'avion

(30) Priority: 18.05.1989 US 353577; 21.12.1989 US 454480
(43) Date of publication of application: 22.11.1990
(73) Proprietor: THE B.F. GOODRICH COMPANY, Akron Ohio 44313-1799 (US)
(72) Inventor: Zaremsky, Gary Jay, Yellow Springs, Ohio 45387 (US)
(74) Representative: Selting, Günther, Dipl.-Ing.

(56) References cited:
- DE-U- 8 530 233
- GB-A- 1 402 534
- US-A- 3 357 519

## Description

This invention relates to a friction aircraft braking system and more particularly to a new and improved aircraft friction disc braking system having vibration dampening means.

During the braking of an aircraft, the alternately splined stator and rotor discs are brought into sliding contact with each other generating heat and vibration within the braking system. The rotary and stator discs which can be made of metal or carbon must withstand the high heat build-up in such brakes as well as the vibration that occurs therein, which vibration creates noise, reduces the brake lining life and can effect structural fatigue.

From US-A-3 357 519, an aircraft brake damper mechanism is known in which a damper capsule consisting of annular plates is provided between an annular flange of the axle of the aircraft wheel and the torque tube which includes the stator discs. The damper capsule comprises two annular parts each of which is secured to the associated flange of axle or the torque tube, respectively. Each annular part of the damper capsule carries several annular plates with the plates of the one annular part being interleaved between the plates of the other annular part. Between the spaced and interleaved annular plates of the dampening capsule, elastomeric layers of suitable high dampening material are arranged. These elastomeric layers are bonded or suitably attached to the annular plates or the annular parts or the damper capsule. Attachment of the known damper mechanism in an aircraft wheel is rather difficult and bothersome.

It is an object of the present invention to provide an aircraft brake in which installing the damper mechanism is easy to perform, with enhancing the overall structural performance while significantly reducing the vibrations.

In one preferred embodiment, the present invention is directed to an aircraft multiple disc brake assembly having a viscoelastic dampening plate for use between the axle flange and the torque tube wherein the torque tube supports for axial movement only a plurality of axially spaced stator discs which are interleaved with a plurality of axially spaced rotor discs, which in turn are supported and connected for rotation with the wheel assembly that is mounted for rotation on the axle. A plurality of motive drive means are connected to the interleaved discs to effect axial displacement for frictional engagement of the discs.

The viscoelastic dampening plate member of the invention is an elastic deformable member that yields but recovers its shape and form upon cessation of the stresses of vibration, which plate member dissipates the mechanical energy into heat. Fastening means extend through and rigidly secure together the flanges of the axle and the torque tube and the dampening plate member therebetween.

The aircraft brake of the present invention provides a simple expedient of dampening the vibration by installing a viscoelastic plate member along the transmission path of the vibration mode as between the brake discs and the supporting structure to isolate the brake discs from the supporting structures to enhance overall structural performance while significantly reducing the vibrations.
- Fig. 1: is a fragmentary cross-sectional view of a brake assembly embodying the invention (vibration dampening plate) as mounted on an aircraft installation;

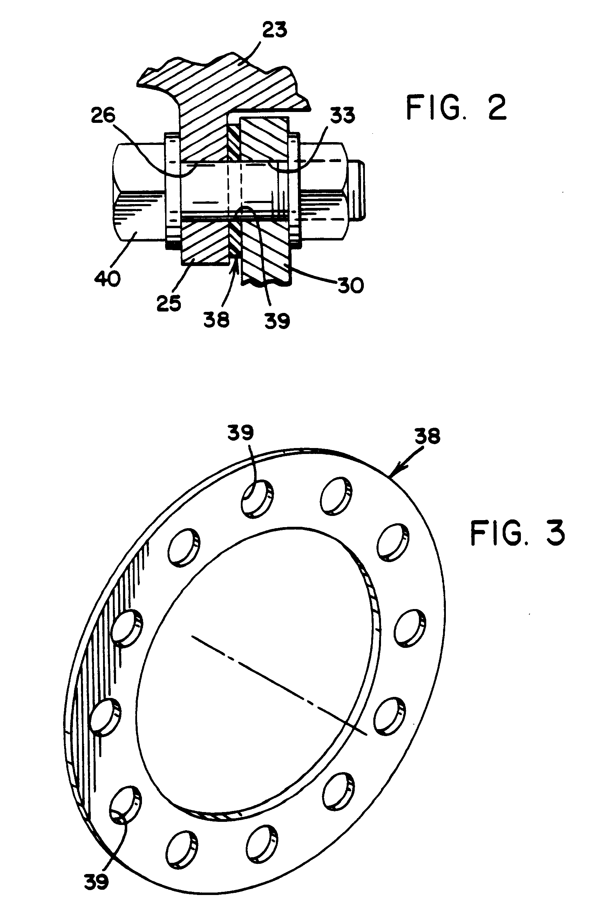

- Fig. 2: is an enlarged cross-sectional view of the axle flange and its connection to the torque tube flange with a viscoelastic plate interposed therebetween;
- Fig. 3: is an isometric view of the viscoelastic dampening plate;
- Fig. 4: is a fragmentary cross-sectional view of a brake assembly embodying a modification of the invention;
- Fig. 5: is a fragmentary cross-sectional view of a brake assembly embodying a further modification of the invention;
- Fig. 6: is a fragmentary cross-sectional view of a modified brake assembly embodying the invention as mounted on an aircraft installation.

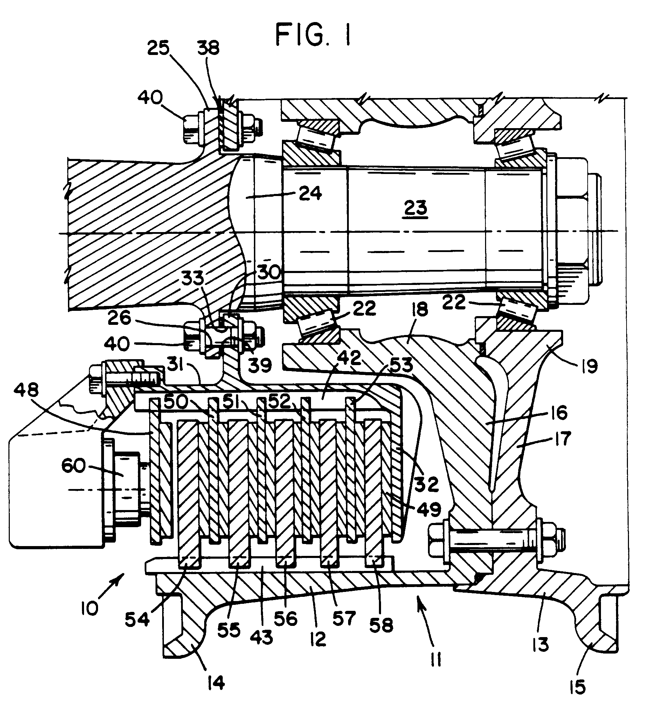

Referring to the drawings, wherein like reference numerals designate like or corresponding parts throughout the several views, there is shown in Fig. 1 a friction brake mechanism 10 for use with a cylindrical wheel 11 having matching wheel sections 12 and 13. Each of the wheel sections 12 and 13 has a rim member 14 and 15, web member 16 and 17, and hub members 18 and 19. The wheel sections 12 and 13 are fastened together by suitable bolts disposed in aligned bores within web members 16 and 17 to form an integral unit therewith.

The hub members 18 and 19 are supported for rotation on bearings 22 which are mounted on a nonrotatable axle member 23. Mounted on a cylindrical boss 24 of axle member 23 is a torque flange 25. Torque flange 25 has a plurality of circumferentially spaced bores 26 for securing such flange to a torque tube member to be described. Torque flange 25 supports and is connected to an annular flange 30 of a cylindrical torque tube member or torque tube 31, which torque tube member 31 has an annular and radially outwardly extending reaction plate or reaction member 32. Such annular flange 30 has a plurality of circumferentially spaced bores 33 which are in alignment with the bores 26 on torque flange 25. The reaction plate 32 may be made integral with the torque tube member 31 or may be made as a separate annular piece and suitably connected to the torque tube or torque tube member 31.

An annular disc or plate member 38 made from a solid non-consumed single layer non-laminate or a solid non-consumed multi-layered laminate of viscoelastic material is received between the annular flange 30 and the torque flange 25. Annular disc 38 has a plurality of circumferentially spaced bores 39 in alignment with bores 26 of torque flange 25 and bores 33 of annular flange 30 such as to facilitate the reception of bolts 40 that extend through these bores 26 and 33 to interconnect the torque flange 25 with annular flange 30 of cylindrical torque tube member 31. The thickness of viscoelastic annular disc or plate member 38 is approximately .050" (.1270 cm) and would thus leave an axial clearance space between flange 30 and flange 25. Such thickness of the viscoelastic annular plate member 38 may be in a range from .100" to .001" (.254 cm to .0254 cm).

Torque tube 31 has a plurality of circumferentially spaced splines or spline members 42 which are axially extending. Wheel section 12 has a plurality of circumferentially spaced ribs or splines 43 on its inner peripheral surface, which may be cast therein or may be machined to provide an integral type rib or spline for the brake assembly.

Spline members 42 support an axially nonrotatable end disc 48 and inner discs 50, 51, 52 and 53. All of such nonrotatable discs 48, 51, 50, 52 and 53 have slotted openings at circumferentially spaced locations on the inner periphery for captive engagement by the spline members 42 as is old and well known in the art. Such discs 48, 50, 51, 52 and 53 constitute the stators for friction brake 10. An annular disc or annular braking element 49 is suitably adhered to the inner surface of the reaction plate 32 and acts in concert with the stator discs 48, 50, 51, 52 and 53.

A plurality of axially spaced discs 54, 55, 56, 57 and 58 interspaced or interleaved between the stator discs 48 through 53, have a plurality of circumferentially spaced openings along their outer periphery for engagement by the corresponding ribs 43 as is old and well known in the art thereby forming the rotor discs for the friction brake 10. All of the nonrotatable discs (48, 50, 51, 52, 53), annular disc 49, and rotatable discs (54 through 58) may be made from a suitable brake material such as metal, steel or other wear-resistant material for withstanding high temperatures and providing a heat sink. The number of discs may be varied as is necessary for the application involved. The respective stator discs and rotor discs that have the circumferentially spaced openings on the inner and outer periphery may accommodate reinforcing inserts to provide reinforcement to the walls of such slotted openings and to enhance the life of such slots as is old and well known in the art. Such reinforcing inserts are also referred to as drive clips.

The actuating mechanism for the brake includes a plurality of circumferentially spaced cylinders 60 suitably connected to the torque tube 31. Within each of the cylinders 60 is a hydraulic piston connected to piston rod which is operative to move the stator disc 48 axially into and out of engagement with the rotatable disc 54 which in turn operates to have all of the brake disc to frictional engage their radial surfaces and are resisted by the end stationary annular disc 49 and the reaction plate 32 on torque tube 31. During this period of brake disc engagement the friction forces among all the rotatable and non-rotatable discs may cause vibration within the discs and the adjacent structures unless dampened. It is the frictional engagement of these stator and rotor discs which produces the braking action for the aircraft wheel.

The annular viscoelastic solid elastic deformable disc or plate 38 is operative to reduce vibration during the braking operation. The annular viscoelastic plate dampens vibration via its internal structure which helps to dissipate mechanical energy into heat contrasting to the use of a material where internal shear friction is induced to dampen vibration but the material abrades. This is a significant difference. Materials used in the dampening process of the annular discs can be a laminate of a steel-rubber-steel layered construction, a metal construction other than steel or a polymer such as an elastic silicone rubber of methyl phenyl silicone type or a laminate with one or more layers of a viscoelastic polymer which can be ethylene, vinyl acetate and acrylic and/or methacrylic acid. Elastic deformable as used herein to describe the plate 38 means its capability of recovering size and shape after the deformation while dissipating the mechanical energy into heat without any material abrading. Such described viscoelastic plate 38 dampens vibration and is to be distinguished from a heat shield which can be employed adjacent to plate 38 but which performs a completely different function.

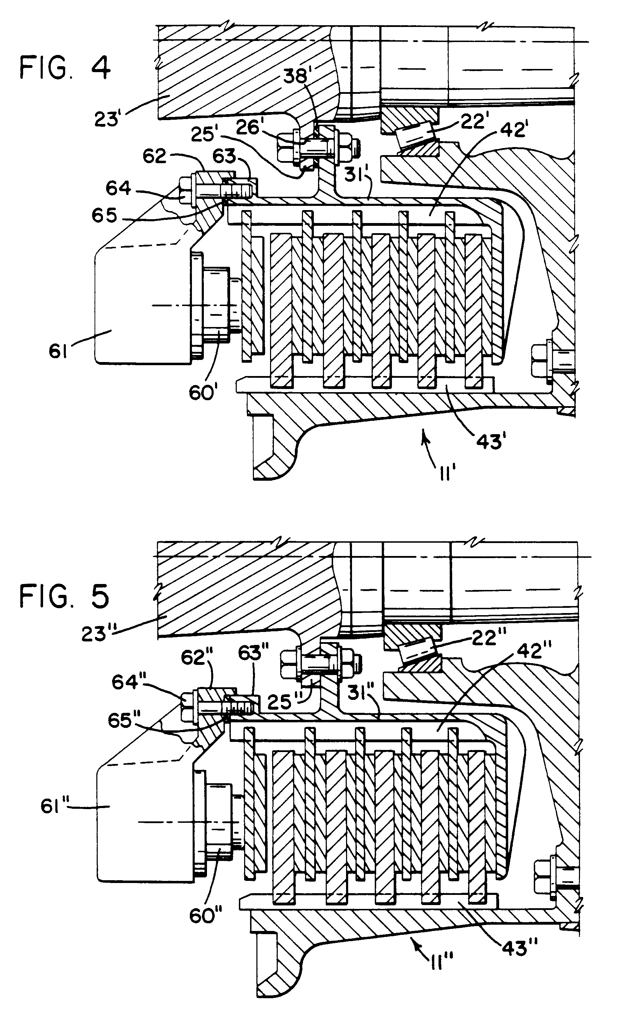

A modification of the invention is shown in Fig. 4 wherein a cylindrical wheel 11′ is suitably supported for rotation on bearings 22′, which bearings are mounted on a nonrotatable axle member 23′. A torque flange 25′ as disclosed in the first embodiment is integral with the axle member 23′. Torque flange 25′ has a plurality of circumferentially spaced bores 26′ to provide means for securing such flange 25′ to an annular flange of a torque tube member or torque tube 31′. Such annular flange of torque tube 31′ has a plurality of circumferentially spaced bores in alignment with the bores 26′ on torque flange 25′.

An annular disc or plate member 38′ identical to plate member 38 of the first embodiment is interposed between the torque flange 25′ and the flange of the torque tube 31′ and is fastened thereto to dampen vibration.

Torque tube 31′ has a plurality of circumferentially spaced splines or spline members 42′ which are axially extending wheel 11′ has a plurality of circumferentially spaced ribs or splines 43′ on its inner peripheral surface, which may be cast therein or may be machined to provide integral ribs or splines for the brake assembly.

Spline member 42′ of torque tube 31′ supports a plurality of stators or nonrotatable discs while ribs 43′ support a plurality of rotors or rotatable discs interleaved with the stators forming a brake stack as previously described in the first embodiment. Such stator and rotor discs are made from a suitable brake material for withstanding high temperatures.

The actuating mechanism for the brake includes a plurality of circumferentially spaced cylinders 60′ mounted on a piston housing support 61 which has an annular hub 62 in alignment with a hub 63 on the torque tube 31′. Such annular hub 62 and hub 63 have circumferentially spaced bores that are in alignment to receive bolts 64 to secure such hubs together. Interposed between the respective hubs 63 and 62 is an annular disc or plate member 65 identical to the plate member 38 of the first embodiment and fastened therebetween by bolts 64 to dampen vibration.

A further modification of the invention is shown in Fig. 5 wherein the brake assembly structure is substantially identical to the two previously described embodiments except for the location of the dampening means.

In this embodiment (Fig. 5) a cylindrical wheel 11˝ is suitably supported for rotation on bearings 22˝, which bearings are mounted on a nonrotatable axle member 23˝. A torque flange 25˝ as disclosed in the first embodiment is integral with the axle member 23˝. Torque flange 25˝ has a plurality of circumferentially spaced bores to provide means for securing such flange 25˝ to an annular flange of a torque tube member or torque tube 31˝ by bolts.

Torque tube 31˝ has a plurality of circumferentially spaced splines 42˝ which are axially extending. Wheel 11˝ has a plurality of circumferentially spaced ribs or splines 43˝ on its inner peripheral surface, which may be cut therein to provide integral ribs or splines for the brake assembly.

Spline members 42˝ of torque tube 31˝ support a plurality of stator or nonrotatable discs while ribs 43˝ support a plurality of rotors or motor discs interleaved with the stators forming a brake stack as previously described in the first embodiment. Such stator and rotor discs are made from a suitable brake material for withstanding high temperatures.

The actuating mechanism for the brake includes a plurality of circumferentially spaced cylinders 60˝ mounted on a piston housing support 61˝ which has an annular hub 62˝ in alignment with a hub 63˝ on the torque tube 31˝. Such annular hub 62˝ and hub 63˝ have circumferentially spaced aligned bores to receive bolts 64˝ to secure such hubs together. Interposed between the respective hubs 62˝ and 63˝ is an annular disc or plate member 65˝ identical to the plate member 38 of the first embodiment and fastened therebetween by bolts 64˝ to dampen vibration. Such plate member 65˝ is made from a solid non-consumed single layer non-laminate or a solid non-consumed multi-layered laminate of viscoelastic material that dampens vibration and is to be distinguished from a heat shield, which heat shield can be employed in addition to the plate member 65˝ but which performs a completely different function.

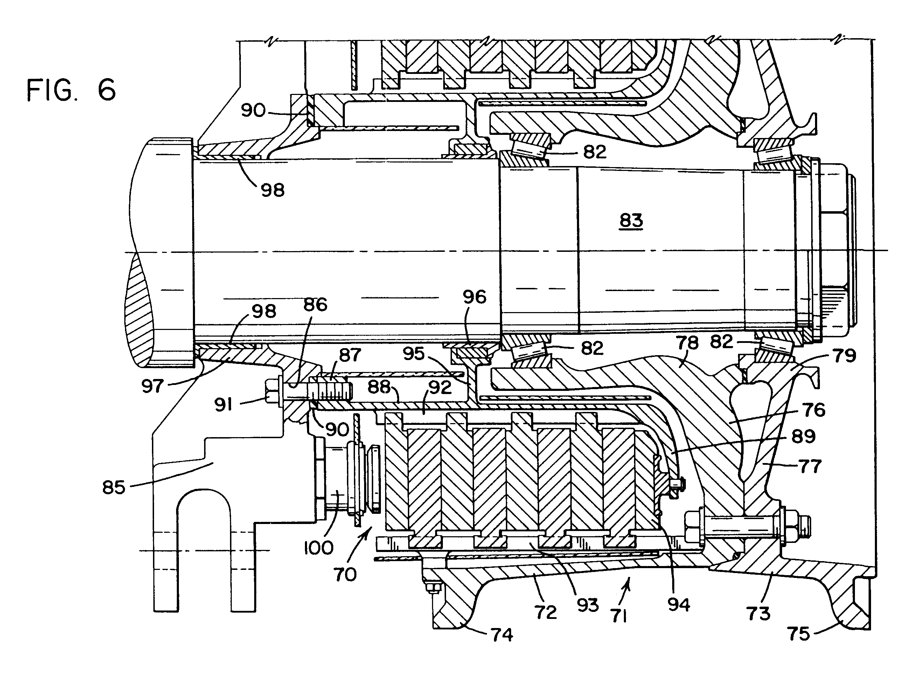

A further modification of the invention is shown in Fig. 6 wherein there is shown in Fig. 6 a friction brake mechanism 70 for use with a cylindrical wheel 71 having matching wheel sections 72 and 73. Each of the wheel sections 72 and 73 has a rim member 74 and 75, web member 76 and 77, and hub members 78 and 79. The wheel sections 72 and 73 are fastened together by suitable bolts disposed in aligned bores within web members 76 and 77 to form an integral unit therewith.

The hub members 78 and 79 are supported for rotation on bearings 82 which are mounted on a nonrotatable axle member 83. Mounted on an axle member 83 is a piston housing 85. Piston housing 85 is an annular hub in configuration with a plurality of circumferentially spaced bores 86 on its radial inner portion to provide means for securing such piston housing to a torque tube member to be described. Piston housing 85 supports and is connected to an annular flange or hub 87 of a cylindrical torque tube member or torque tube 88, which torque tube member 88 has an annular and radially outwardly extending reaction plate or reaction member 89. Such annular flange 87 has a plurality of circumferentially spaced bores which are in alignment with the bores 86 on piston housing 85. The reaction plate 89 may be made integral with the torque tube member 88 or may be made as a separate annular piece and suitably connected to the torque tube or torque tube member 88.

An annular disc or plate member 90 made from a solid non-consumed single layer non-laminate or a solid non-consumed multi-layered laminate of viscoelastic material is received between the annular flange or hub 87 and the piston housing 85. Such disc 90 is identical to the plate member 38 of the first embodiment. Annular disc 90 has a plurality of circumferentially spaced bores in alignment with bores 86 of the piston housing 85 such as to facilitate the reception of bolts 91 that extend through these bores 86 to interconnect the piston housing 85 with annular flange 87 of cylindrical torque tube member 88.

Torque tube 88 has a plurality of circumferentially spaced splines or spline members 92 which are axially extending. Wheel section 72 has a plurality of circumferentially spaced ribs or splines 93 on its inner peripheral surface, which may be cast therein or may be machined to provide an integral type rib or spline for the brake assembly.

Spline members 92 support a plurality of axially aligned nonrotatable or stator discs which have slotted openings at circumferentially spaced locations on the inner periphery for captive engagement by the spline members 92 as is old and well known in the art. An annular disc or annular braking element 94 is suitably adhered to the inner surface of the reaction plate 89 and acts in concert with the above referred to stator discs.

A plurality of axially spaced rotor brake discs are interspaced or interleaved between the above referred to stator discs which have circumferentially spaced openings along their outer periphery for engagement by the corresponding ribs 93 as is old and well known in the art. All of the nonrotatable discs, annular disc 94, and rotatable discs may be made from a suitable brake material such as metal, steel or other wear-resistant material for withstanding high temperatures and providing a heat sink. The number of discs may be varied as is necessary for the application involved. The respective stator discs and rotor discs that have the circumferentially spaced openings on the inner and outer periphery may accommodate reinforcing inserts to provide reinforcement to the walls of such slotted openings and to enhance the life of such slots as is old and well known in the art. Such reinforcing inserts are also referred to as drive clips.

The torque tube 88 has a circumferentially extending foot or rib 95 extending radially inwardly therefrom, having mounted thereon a bushing 96 to provide additional support between the axle 83 and the torque tube 88. In addition a flange 97 on the inner periphery of piston housing 85 has a bushing 98 mounted thereon to additionally support the axle 83.

The actuating mechanism for the brake includes a plurality of circumferentially spaced cylinders 100 suitably mounted on the piston housing 85. Within each of the cylinders 100 is a hydraulic piston connected to piston rod which is operative to move the stator disc axially into and out of engagement with the rotor discs to frictional engage their radial surfaces and are resisted by the end stationary annular disc 94 and the reaction plate 89 on torque tube 88. During this period of brake disc engagement the friction forces among all the rotatable and non-rotatable discs may cause vibration within the discs and the adjacent structures unless dampened. It is the frictional engagement of these stator and rotor discs which produces the braking action for the aircraft wheel.

The annular viscoelastic solid elastic deformable disc or plate 90 is operative to reduce vibration during the braking operation. The annular viscoelastic plate dampens vibration via its internal structure which helps to dissipate mechanical energy into heat contrasting to the use of a material where internal shear friction is induced to dampen vibration but the material abrades. This is a significant difference. Materials used in the dampening process of the annular discs can be a laminate of a steel-rubber-steel layered construction, a metal construction other than steel or a polymer such as an elastic silicone rubber of methyl phenyl silicone type or a laminate with one or more layers of a viscoelastic polymer which can be ethylene, vinyl acetate and acrylic and/or methacrylic acid. Elastic deformable as used herein to describe the plate 90 means its capability of recovering size and shape after the deformation while dissipating the mechanical energy into heat without any material abrading.

It will be apparent that, although a specific embodiment and certain modifications of the invention have been described in detail, the invention is not limited to the specifically illustrated and described constructions since variations may be made without departing from the principles of the invention.

## Claims

1. Aircraft brake comprising
- an axle (23;83) with a central axis of rotation,
- bearing means (22;22';22'';82) mounted on said axle (23;83),
- a wheel (11) mounted on said bearing means (22; 22';22'';82) for rotation relative to said axle (23;83), said wheel having a plurality of circumferentially spaced splines (43;43';43'';93),
- a plurality of rotor discs (54-58) mounted on said wheel (11) and keyed to said splines (43;43';43''; 93) for rotation therewith,
- a torque tube member (31;31';31'';88) being connected stationarily at said axle (23;83) with respect to said rotatable wheel (11), said torque tube member (31;31';31'';88) having a plurality of axially extending ribs (42,42',42'';92),
- a plurality of stator discs (50-53) with circumferentially spaced slots engaging said ribs (42; 42';42'';92) for axial movement of said stator discs (50-53), said stator discs (50-53) being interleaved between said rotor discs (54-58),
- motive means (60;60';61,62;60'',61'',62'';85,87,100) connected to said torque tube member (31;31';31''; 88) for moving said stator discs (50-53) and said rotor discs (54-58) towards each other to effect a braking action, and
- a dampening means for dampening vibration mounted between said axle (23;83) and said torque tube member (31;31';31'';88) and/or between said motive means (60;60',61,62;60',61'',62'';85,87,100) and said torque tube member (31;31';31'';88),
**characterized in that**
- said dampening means is one solid elastic deformable annular dampening plate (38; 38',65;65'';90) being made of a viscoelastic material operative to convert mechanical energy into heat energy and to dampen vibration between said axle (23;83) and said torque tube member (31;31';31'';84) and/or between said motive means (60;60',61,62;60'',61'',62'';85,87,100) and said torque tube member (31;31';31'';88) during braking action,
- said annular dampening plate (38;38';65;65'';90) is mounted between annular flanges (25;25';25''; 30) of said axle (23;83) and of said torque tube member (31;31';31'';84) and/or between annular flanges (62,62'';63,63'';87) of said motive means (60; 60';61,62,60'',61'',62'') and of said torque tube member (31;31'',31'';84), and
- there are provided fastening means (40;64;64'', 91) extending through and rigidly securing together the annular flanges (25;25';25'';30;62; 62'';63;63'';87) and said annular dampening plate (38;38';65;65'';90) arranged therebetween.

2. Aircraft brake according to claim 1, characterized in that between said axle (23;83) and said torque tube member (31;31',31'';84) as well as between said motive means (60;60';61,62;60'',61'',62'',85, 87,100) and said torque tube member (31;31';31'';84) each there is provided one solid annular plate (38;38'; 65;65'';90) being made of a viscoelastic material.

3. Aircraft brake according to claim 1 or 2, characterized in that said motive means (85,87,100) is mounted on said axle (83) for supporting said torque tube member (88).

4. Aircraft brake according to any one of claims 1 to 3, characterized in that the axial clearance space radially inwardly and radially outwardly of said annular dampening plate (38;38';65;65'';90) between the annular flanges (25;25';25'';30;62,62'';63;63''; 87) is in the range of 0,254cm to 0,00254cm.

5. Aircraft brake according to any one of claims 1 to 4, characterized in that the thickness of said annular dampening plate (38;38';65;65'';90) is approximately 0,127cm.

6. Aircraft brake according to any one of claims 1 to 5, characterized in that said annular dampening plate (38;38';65;65'';90) is a solid multi-layered laminate that dissipates mechanical energy into heat.

7. Aircraft brake according to claim 6, characterized in that said solid multi-layered laminate comprises an elastic deformable member that returns to its original shape.

## Patentansprüche

1. Flugzeugbremse, mit
- einer Achse (23;83) mit einer Dreh-Mittelachse,
- einer an der Achse (23;83) angebrachten Lagereinrichtung (22;22';22'';82),
- einem an der Lagereinrichtung (22;22';22'';82) angebrachten Rad (11) zur Drehung in bezug auf Achse (23;83), wobei das Rad mehrere umfangsmäßig voneinander beabstandete axial verlaufende Vorsprünge (43;43';43'';93) aufweist,
- mehreren an dem Rad (11) angebrachten und zur Drehung mit diesem mit den Vorsprüngen (43;43';43'';93) verzahnten Rotorscheiben (54-58),
- einem in bezug auf das drehbare Rad (11) ortsfest an der Achse (23;83) angekoppelten Drehwiderstandselement (31;31';32'';88), wobei das Drehwiderstandselement (31;31';32'';88) mehrere axial verlaufende Rippen (42;42';42'';92) aufweist,
- mehreren Statorscheiben (50-53) mit umfangsmäßig beabstandeten Schlitzen, die zur axialen Bewegung der Statorscheiben (50-53) mit den Rippen (42,42',42'';92) zusammengreifen, wobei die Statorscheiben (50-53) zwischen den Rotorscheiben (54-58) angeordnet sind,
- einer mit dem Drehwiderstandselement (31;31';32'';88) verbundenen Antriebseinrichtung (60;60';61,62;60'', 61'',62'';85,87,100), um die Statorscheiben (50-53) und die Rotorscheiben (54-58) zum Bewirken einer Bremswirkung aufeinander zu zu bewegen, und
- einer zwischen der Achse (23;83) und dem Drehwiderstandselement (31;31';32'';88) und/oder zwischen der Antriebseinrichtung (60;60',61,62;60'',61'',62'';85,87, 100) und dem Drehwiderstandselement (31;31';32'';88) angebrachte Dämpfungseinrichtung zum Dämpfen von Schwingungen,
**dadurch gekennzeichnet,**
- daß die Dämpfungseinrichtung eine massive elastische verformbare ringförmige Dämpfungsplatte (38;38',65; 65'';90) aus einem viskoelastischen Material ist, die während der Bremsfunktion zum Umwandeln von mechanischer Energie in Wärmeenergie und zum Dämpfen von Schwingungen zwischen der Achse (23;83) und dem Drehwiderstandselement (31;31';32'';84) und/oder zwischen der Antriebseinrichtung (60;60',61,62;60'',61'',62'';85, 87,100) und dem Drehwiderstandselement (31;31';32'';88) betreibbar ist,
- daß die ringförmige Dämpfungsplatte (38;38';65;65'';90) zwischen Ringflanschen (25;25';25'';30) der Achse (23;83) und des Drehwiderstandselements (31;31';31''; 84) und/oder zwischen Ringflanschen (62,62'';63,63'';87) der Antriebseinrichtung (60;60';61,62,60'',61'',62'') und des Drehwiderstandselements (31;31';31'';84) angebracht ist, und
- daß durch die Ringflansche (25;25';25'';30;62;62'';63; 63'';87) und die dazwischen angeordnete ringförmige Dämpfungsplatte (38;38';65;65'';90) verlaufende und diese starr aneinander befestigende Befestigungseinrichtungen (40;64;64'',91) vorgesehen sind.

2. Flugzeugbremse nach Anspruch 1, dadurch gekennzeichnet, daß jeweils sowohl zwischen der Achse (23;83) und dem Drehwiderstandselement (31;31',31'';84) als auch zwischen der Antriebseinrichtung (60;60';61,62;60'',61'',62'',85,87,100) und dem Drehwiderstandselement (31;31';31'';84) eine massive ringförmige Platte (38;38';65;65'';90) aus einem viskoelastischen Material vorgesehen ist.

3. Flugzeugbremse nach Anspruch 1 oder 2, dadurch gekennzeichnet, daß die Antriebseinrichtung (85,87,100) an der Achse (83) zum Stützen des Drehwiderstandselements (88) angebracht ist.

4. Flugzeugbremse nach einem der Ansprüche 1 bis 3, dadurch gekennzeichnet, daß der radial innere und radial äußere axiale Spielraum der ringförmigen Dämpfungsplatte (38;38';65;65'';90) zwischen den Ringflanschen (25;25';25''; 30;62,62'';63;63'';87) im Bereich von 0,254cm bis 0,00254cm liegt.

5. Flugzeugbremse nach einem der Ansprüche 1 bis 4, dadurch gekennzeichnet, daß die Dicke der ringförmigen Dämpfungsplatte (38;38';65;65'';90) ungefähr 0,127cm beträgt.

6. Flugzeugbremse nach einem der Ansprüche 1 bis 5, dadurch gekennzeichnet, daß die ringförmige Dämpfungsplatte (38;38';65;65'';90) ein massives mehrlagiges Laminat ist, das mechanische Energie durch Umsetzen in Wärme vernichtet.

7. Flugzeugbremse nach Anspruch 6, dadurch gekennzeichnet, daß das massive mehrlagige Laminat ein elastisches verformbares Teil aufweist, das in seine Ausgangsform zurückkehrt.

## Revendications

1. Frein d'avion comprenant :
- un essieu (23;83) comportant un axe central de rotation,
- des moyens formant paliers (22;22';22'';82) montés sur ledit essieu (23;83),
- une roue (11) montée sur lesdits moyens formant paliers (22;22';22'';82) pour tourner par rapport audit essieu (23;83), ladite roue possédant une pluralité de cannelures (43;43';43'';93) espacées circonférentiellement,
- une pluralité de disques de rotor (54-58) montés sur ladite roue (11) et clavetés sur lesdites cannelures (43;43',43'';93) pour tourner conjointement avec la roue,
- un élément tubulaire de transmission de couple (31;31';31'';88) raccordé de façon fixe audit essieu (23;83) par rapport à ladite roue rotative (11), ledit élément tubulaire de transmission de couple (31;31';31'';88) possédant une pluralité de nervures axiales (42,42',42'';92),
- une pluralité de disques de stator (50-53) comportant des fentes espacées circonférentiellement et s'engageant sur lesdites nervures (42;42';42'';92) pour déplacer axialement lesdits disques de stator (50-53), lesdits disques de stator (50-53) étant imbriqués entre lesdits disques de rotor (54-58),
- des moyens d'entraînement (60;60';61;62;60'';61'';62'' 85,87,100) raccordés audit élément tubulaire de transmission de couple (31;31';31'';88) pour rapprocher lesdits disques de stator (50-53) et lesdits disques de rotor (54-58) pour obtenir une action de freinage, et
- des moyens d'amortissement servant à amortir les vibrations et bontés entre ledit essieu (23;83) et ledit élément tubulaire de transmission de couple (31;31';31'';88) et/ou entre lesdits moyens d'entraînement (60;60';61,62;60'',61'',62'';85,87,100) et ledit élément tubulaire de transmission de couple (31;31';31'';88),
caractérisé en ce que
- lesdits moyens d'amortissement sont constitués par une plaque annulaire d'amortissement pleine, élastique et déformable (30,38';65;65'';90) réalisée en un matériau visco-élastique apte à convertir une énergie mécanique en une énergie thermique et à amortir les vibrations entre ledit essieu (23;83) et ledit élément tubulaire de transmission de couple (31;31';31'';84) et/ou entre lesdits moyens d'entraînement (60;60',61,62;60'',61'', 62'';85,87,100) et ledit élément tubulaire de transmission de couple (31;31';31'';88) pendant une action de freinage,
- ladite plaque annulaire d'amortissement (38;38';65';65'';90) est montée entre des brides annulaires (25;25';25'';30) dudit essieu (23;83) et dudit élément tubulaire de transmission de couple (31;31';31'';84) et/ou entre des brides annulaires (62,62'';63,63'';87) desdits moyens d'entraînement (60;60',61,62;60'',61'',62'') et du dit élément tubulaire de transmission de couple (31;31';31'';84), et
- il est prévu des moyens de fixation (40;64;64'',91) qui s'étendent entre et fixent rigidement entre elles les brides annulaires (25;25';25'';30;62;62'';63;63'';87) et ladite plaque annulaire d'amortissement (38;38';65;65'';90) disposée entre ses brides.

2. Frein d'avion selon la revendication 1, caractérisé en ce qu'entre ledit essieu (23;83), et ledit élément tubulaire de transmission de couple (31;31',31'';84) ainsi qu'entre lesdits moyens d'entraînement (60;60';61,62;60'',61'',62'';85,87,100) et ledit élément tubulaire de transmission de couple (31;31',32'';84) est prévue respectivement une plaque annulaire pleine (38;38';65;65'';90) réalisée en un matériau visco-élastique.

3. Frein d'avion selon la revendication 1 ou 2, caractérisé en ce que lesdits moyens d'entraînement (85,87,100) sont montés sur ledit essieu (83) pour supporter ledit élément tubulaire de transmission de couple (88).

4. Frein d'avion selon l'une quelconque des revendications 1 à 3, caractérisé en ce que l'espace formant jeu axial qui s'étend radialement vers l'intérieur et radialement vers l'extérieur de ladite plaque annulaire d'amortissement (38;38';65';65'';90) entre les brides annulaires (25;25';25'';30;62,62'';63;63'';87) se situe dans la gamme de 0,254 cm à 0,00254 cm.

5. Frein d'avion selon l'une quelconque des revendications 1 à 4, caractérisé en ce que l'épaisseur de ladite plaque annulaire d'amortissement (38;38';65;65'';90) est égale approximativement à 0,127 cm.

6. Frein d'avion selon l'une quelconque des revendications 1 à 5, caractérisé en ce que ladite plaque annulaire d'amortissement (38;38';65;65'';90) est une structure formée d'un stratifié à couches multiples qui dissipe une énergie mécanique sous la forme de chaleur.

7. Frein d'avion selon la revendication 6, caractérisé en ce que ledit stratifié pleine à couches multiples comprend un élément élastique déformable qui reprend sa forme initiale.
